# EUROPEAN PATENT APPLICATION

(11) **EP 0 619 512 A1**
(43) Date of publication of application: **12.10.1994**
(21) Application number: 94200923.4
(22) Date of filing: 05.04.1994
(51) Int. Cl.: G03B 21/64, G03B 27/62

(54) **Holder for two-dimensional image**

(30) Priority: 09.04.1993 BE 9300352
(71) Applicant: AGFA-GEVAERT naamloze vennootschap, B-2640 Mortsel (BE)
(72) Inventor: Trouillard, Frank, c/o AGFA-GEVAERT N.V., B-2640 Mortsel (BE); Costrop, Dirk, c/o AGFA-GEVAERT N.V., B-2640 Mortsel (BE)

(57) **Abstract**

A holder (24) is disclosed for positioning at least one sheetlike image (23) wherein said holder (24) comprises several layers assembled one to the other by adhesive joints and wherein at least the uppermost of said layers has at least one slot (46) for introducing said image (23) and at least one opening (48) for exposing (21) said image (23) and wherein said image (23) is flattened in order to avoid Newtonian rings.

## Description

### FIELD OF THE INVENTION

The present invention relates to a holder for a two-dimensional image that is being exposed in a scanning device for digital data processing.

### BACKGROUND OF THE INVENTION

Common image holders as known in the art tend to be of rather complicated construction and are often unwieldy in use. It is known to press the image between two glass plates that have been subjected to a special treatment to prevent annoying reflections and/or Newtonian rings; in addition, such glass plates are usually spring-loaded and frequently equipped with hinge and/or pressure means.

Whereas US 2,799,107 describes a file card structure for transparent strips and/or individual frames of exposed photographic film, and whereas US 4,357,073 describes a filmstrip holder for a collapsible stereoscopic viewer, the holder of the present invention is not restricted to transparent images but clearly also may be applied to reflective images; secondly, according to the present invention, the images are flattened in order to avoid Newtonian rings.

### OBJECTS OF THE INVENTION

It is an object of the invention to provide a suitable image holder that can be bought at a reasonable price and is yet convenient and reliable in practical use.

Other objects and advantages will become apparent from the description hereinbelow referring to the enclosed drawings.

### SUMMARY OF THE INVENTION

We now have found that the abovementioned objects can be achieved by providing a flat holder for positioning at least one sheetlike image in relation to an exposure light source wherein said holder comprises several layers assembled one to the other by adhesive joints and wherein at least the layer located nearest to the exposure light source has at least one opening for exposing said image and at least one feed slot for introducing said image, and wherein said sheetlike image is flattened in order to avoid Newtonian rings.

### DETAILED DESCRIPTION OF THE INVENTION

The present invention will be described in detail hereinbelow by way of example with reference to the enclosed figures 1 to 7, wherein
- Fig. 1: is a general representation of a scanning and digitizing device;
- Fig. 2: is a schematic diagram of the actual scanner of the device of fig. 1;
- Fig. 3: is a representation of the exposure area;
- Fig. 4: is a cross-sectional view of an image holder according to the present invention;
- Fig. 5: is a cross-sectional view of an alternative embodiment of the inventive image holder;
- Fig. 6: is a top view of a holder according to the present invention; The expression "holder" means in the present context image holder, transparency holder, negative holder and original holder.
- Fig. 7: is a top view of the upper sheet material.

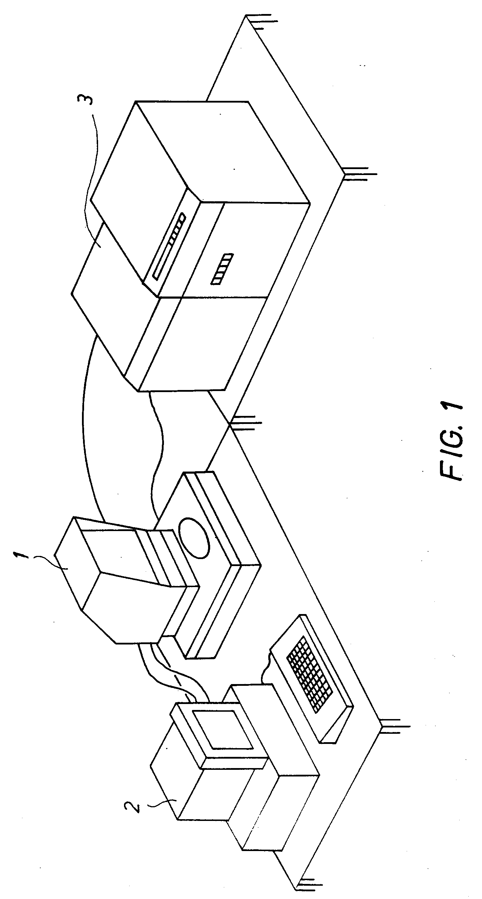

Fig. 1 is a general representation of a scanning and digitizing system that may consist of three subdevices, i.e. a viewer 1, a microprocessor 2 and a scanner 3.

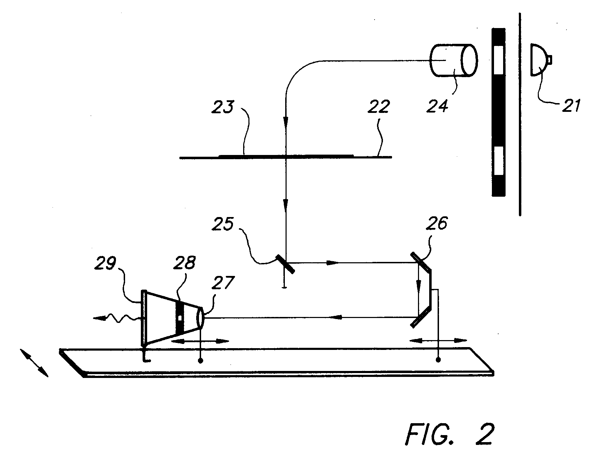

Fig. 2 is a schematic diagram in further detail of such scanner 3 as arranged for the digitizing of transparent original images. Said scanner 3 comprises a light source 21 and a transparent table 22 for supporting the sheetlike image 23, the light source 21 and the table 22 being spaced apart by a given distance by technical means, which are not illustrated in said figure. In addition, the scanner 3 comprises an optical system (24 to 29) for transmitting the image-wise modulated light to an optoelectronic sensor, e.g. a charged coupled device or CCD, and further electronic means for the conversion into digital signals. The operation of the scanner 3 is controlled by microprocessor, e.g. through a linked personal computer 2. Optionally, the image may be visually examined on a viewer 1, e.g. for selecting specific areas or for setting particular parameters, such as image size, enlargement scale and the like.

The present invention relates to a holder for a two-dimensional sheetlike image 23 that is being exposed in a scanner device 3 for digital data processing and to a process for operating the holder as defined above.

The invention is neither restricted to the examples as described nor to the embodiment as illustrated.

Although the invention may be applied to reflection originals for exposure 21 by reflected light, the detailed description will mainly focus on the application to transparency originals or negatives to be viewed by transparency for exposure 21 by transmitted light.

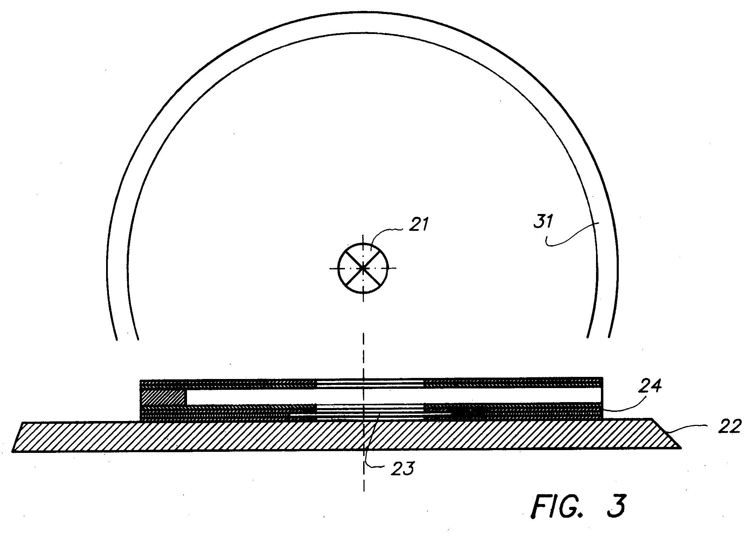

In this connection, the fig. 3 gives some further details on the exposure area, which in case of transmitted light may comprise at least a light source 21, a reflector 31, a glass plate table 22, a sheetlike image 23 and an image holder 24, which will be described more in detail hereinbelow.

The purpose of the invention is to offer the possibility of processing more than one original image (transparencies or negatives), preferably a large number thereof, in one single scanning operation. Therefore, the film has to be kept flat and should be detached from the glass in order to avoid Newtonian rings. The film is available in strips of five transparencies or five negatives as commercial standard cutting and storing form, i.e. without separate framing.

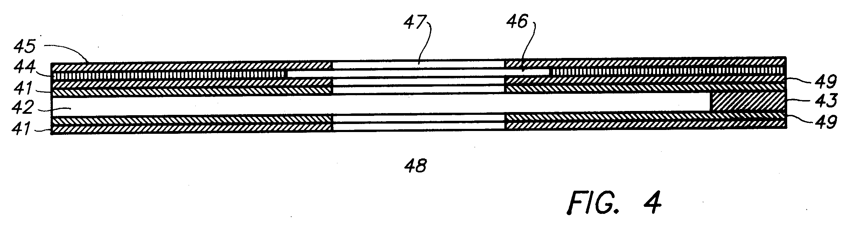

The holder 24 consists of several layers that are laid up according to a specific assembly and are illustrated in further detail on fig. 4 and following.

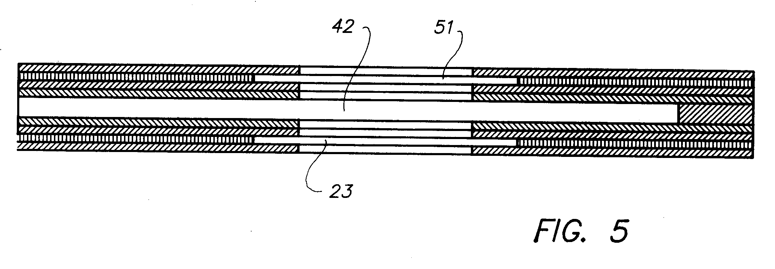

For clarity's sake it is pointed out that fig. 3 and 5 are cross-sectional views of the holder 24 in scanning position, wherein the exposure light source 21 is situated on top and the supporting glass plate 22 of the scanner 3 at the bottom; during such scanning also the sheetlike image 23 is located at the bottom of the holder 24. Fig. 4, 6 and 7 are diagrams of the holder 24 in a (reversed) auxiliary position, wherein the next scanning operation is being prepared, the sheetlike image 23 being located on top.

In general (see fig. 4), the holder 24 consists of two pieces of basic sheet material 41 with double-coated adhesive tape 49, a glass plate 42, a resilient medium (such as expanded plastics or expanded rubber) 43, an intermediate tape 44 and an upper sheet material 45.

To the lower basic sheet material 41 is adhered the expanded plastic 43 having an opening in which the glass plate 42 is installed. To the other side is adhered another basic sheet material 41, on top of which is mounted the intermediate tape 44 and thereon the upper sheet material 45. As a result, a slot or slide 46 is formed in which a film 23 can be inserted. So the film 23 lies flattened between basic sheet material 41 and upper sheet material 45. The intermediate tape 44 laterally leaves just enough space for introducing the film 23.

The structure of the intermediate tape 44 is as follows : the base of the intermediate tape has a thickness of 0.1 mm, it is screened on both sides with an adhesive coating of a few thousandths of mm thick. The assembly results in a guaranteed 0.1-mm gap with a maximum tolerance of 0 to + 0.05 mm.

The width variation between the slide opening 46 for the sheetlike image 23 and the viewing opening 47 for visually examining said image 23 during the scan preparation provides a clamping system that is properly flattening the film 23, spacing it by 0.2 mm apart from the glass plate and ensuring a convenient handling (see fig. 4). According to a preferable embodiment of the present invention said openings may have e.g. a width of 38 mm for the slide opening 46 and a width of 25 mm for the viewing opening 47.

The glass plate 42 provides a rigid structure for the assembled set and covers the transparency thereby transmitting the light. The glass has to meet the Agfa-Gevaert N.V. quality specification GN 200.

One side of the basic sheet material 41 is preferably covered with double-coated adhesive tape 49, such as e.g. type 1211 supplied by the MAC TAC company.

The expanded plastic 43 protects the glass plate 42 and the scanner 3 from accidental impacts that might result in damage to the negative holder 24 on the one hand and to the glass plate 22 of the scanner 3 on the other.

Fig. 3 represents the transparency holder 24 in cross-section placed on the scanner 3. To the transparency side, i.e. the side facing the exposure light source, is also adhered a basic sheet material 41. Said basic sheet material is not only provided for aesthetical reasons, but is also protecting the glass 42 and on account of the restricted gap minimizing the scattered light and the cross-talk involved on the CCD.

It will be understood that in case of exposure by transmitted light all layers of the holder 24 should have at least one common exposure opening 48.

The holder 24 can contain 6 strips of 5 transparencies/negative films 23 each. As a matter of fact, five is the standard number of cutting and storing transparency/negative film 23 in the photographic trade. It may happen that 30 transparencies should be scanned in a single pass as it is the case for so-called gang scanning. As it is not likely that the user is willing to cut the strips into separate pieces it may occur that he intends to scan transparency no. 3 on row 1, transparency no. 1 on row 2, transparency no. 5 on row 3, etc. To avoid any cross-talk due to lateral exposure the transparencies/negative films that are not to be scanned should be covered up. Therefore, an alternative embodiment of the holder 24 according to the present invention is used as illustrated in fig. 5. Note that the layer structure on both sides is basically equal. On one side the transparency film 23 is mounted and on the other side black masking strips 51 are inserted to block out the unrequired images.

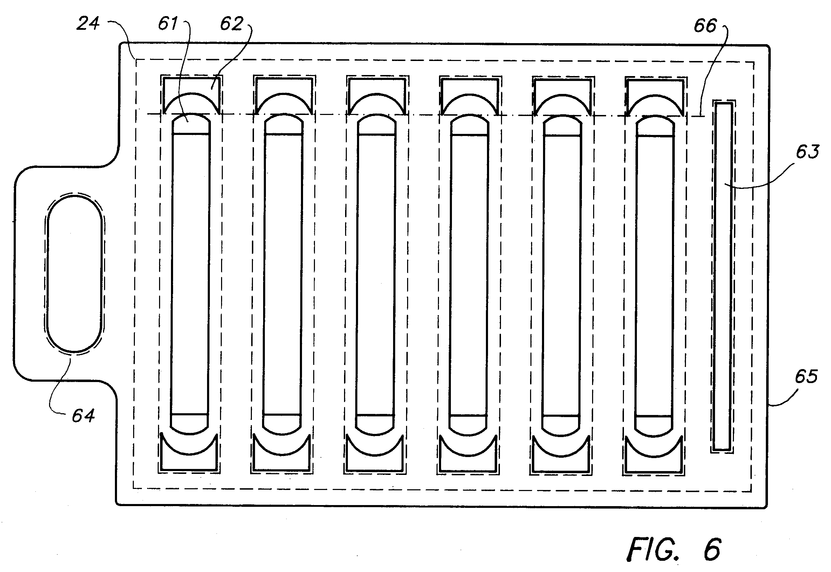

During the scan preparation outside the scanning device 3 the insertion of the transparency/negative film strip 23 proceeds from the slide-in tab 61 (see fig. 6). Upon mounting the slide-in tab 61 is folded back along the fold 66 to facilitate smooth introduction of the film 23. After a few times of repeated use the tab 61 remains open by itself.

During the actual scanning the image holder 24, which has been turned upside down in the meantime, is lying on the scanning device 3. Under the influence of the weight of the glass plate 42 the tab 61 is urged into a seating 62, so that the predetermined distance between the supporting glass plate 22 and the film 23 is met.

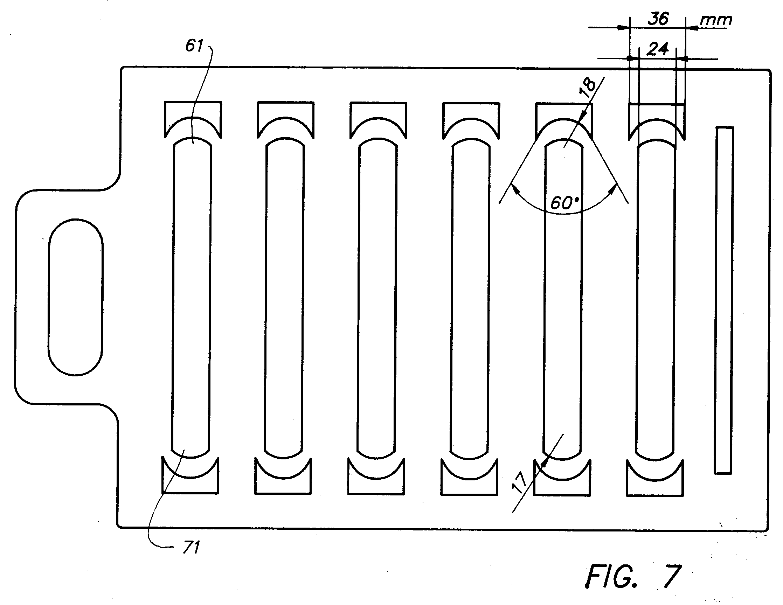

The present invention is further illustrated in fig. 7 by way of particular numerical data of an upper sheet material 45 according to an embodiment of the present invention. The shape of tab 61 has been selected in a way, i.e. with a radius of curvature of 18 mm and widening over an angle of 60° to a width of 36 mm, to prevent the film perforation from ever getting gripped-thereby tearing the film 23. To avoid possible gripping upon sliding-out the leaving edge 71 is also provided with a radius of curvature of 17 mm. It is essential that the mounted film 23 does not extend beyond the insertion openings 62. In the occurrence, the required distance between glass plate 22 and film 23 would not be met. The holder 24 is further fitted at its front end with a calibration hole 63 for calibrating the scanner 3. A handle 64 facilitates simple and easy handling and forces the operator to always use the same guider edge 65 at the paper guider. By the expression paper guider in the present context is meant a geometrical guide frame frequently made of stiff cardboard, plastic material or light aluminium, fixed on top of the scanning device 3 and indicating several sizes, such as DIN A4, A3, A2, quarto, folio, legal size and the like. In addition, the holder is provided with several marks (not illustrated on the enclosed figures) corresponding to said paper guider. They help in registering the holder 24 by means of software for registration and location of the transparencies/negative films 23 to be scanned.

It is clear that a number of alternative configurations are possible within the scope of the present invention. E.g. by optionally placing the scan strips upright (portrait scanning versus landscape scanning) it may be avoided that the workstation 2 has to turn the electronic image data through an angle of 90°, which may result in a substantial decrease of the electronics cost in the production of the scanning system as well as in a considerable gaining of time in the operation of said system. Said principle may be applied to further sizes of the film 23, such as miniature film, narrow-gauge film, microfilm, images of 6 cm by 6 cm, overhead transparencies, etc., provided that a sufficient clamping margin of e.g. 6 mm be allowed.

The invention is neither restricted to the examples as described above nor to the embodiment as illustrated.

The invention may be applied both to reflection originals for exposure by reflected light and transparency originals or negatives to be viewed by transparency for exposure by transmitted light.

Furthermore, the sheetlike image 23 may be produced according to other processes than the conventional photographic processes, e.g. it may be produced by electrophotography, ink-jet printing, offset printing; thermosublimation printing, direct thermal printing, etc.

The application area of the present invention exceeds the conventional photographic art; e.g. micrography, bar-coding and optical character recognition (OCR) may advantageously use the present invention.

## Claims

1. A flat holder (24) for positioning at least one sheetlike image (23) in relation to an exposure light source (21) wherein said holder (24) comprises several layers (41, 42, 43, 44, 45) assembled one to the other by adhesive joints (49) and wherein at least the layer (45) located nearest to the exposure light source (21) has at least one opening (47) for exposing said image (23) and at least one feed slot (61) for introducing said image (23), and wherein said image (23) is flattened in order to avoid Newtonian rings.

2. A holder (24) according to claim 1, wherein said sheetlike image (23) is provided on a photographic material.

3. A holder (24) according to claim 1 or 2, wherein said sheetlike image (23) is provided on a transparent material.

4. A holder (24) according to any of the preceding claims, wherein said sheetlike image (23) is provided on a rectangular film strip (23) comprising several separate images (23).

5. A holder (24) according to any of the preceding claims, wherein said layers comprise a basic sheet material with an adhesive (41), a glass plate (42), a resilient medium (43), an intermediate sheet material with adhesive (44) and an upper sheet material with adhesive (45).

6. A holder (24) according to claim 5, wherein said resilient medium (3) is made of expanded rubber (43).

7. A holder (24) according to claim 5, wherein said upper sheet material (45) comprises a slide-in tab (61) preventing the film strip (23) from getting gripped upon sliding-in.

8. A holder (24) according to claim 5, wherein said upper sheet material (45) comprises a slide-out curvature (71) preventing the film Strip (23) from getting gripped upon sliding-out.

9. A holder (24) according to claim 5 or 7, wherein said upper sheet material (45) comprises slide-in tab (61) and an identical slide-out tab (71) preventing the film strip (23) from getting gripped and enabling both left-hand and right-hand displacements.

10. A holder (24) according to claim 5, wherein said upper sheet material (45) comprises a viewing opening (47) accessible to light that is substantially narrower than the slot width (46) required for positioning the film (23)

11. A holder (24) according to claim 4, wherein more than one film strip (23) is being held and unrequired images (23) are covered up during gang scanning before exposure.

12. A holder (24) according to any of the preceding claims that comprises a calibration hole (63) for electronically calibrating the device that is exposing said sheetlike image (23).

13. A holder (24) according to any of the preceding claims that comprises a lever (64).

14. A holder (24) according to any of the preceding claims that comprises at least one mark for positioning said sheetlike image (23).

15. A holder (24) according to any of the preceding claims that can receive said sheetlike image (23) both in portrait and in landscape arrangement.
